# EUROPÄISCHE PATENTSCHRIFT

(11) **EP 0 383 746 B1**
(45) Veröffentlichungstag und Bekanntmachung des Hinweises auf die Patenterteilung: **28.09.1994**
(21) Anmeldenummer: 90890029.3
(22) Anmeldetag: 08.02.1990
(51) Int. Cl.: B21D 19/04, B23C 3/12

(54) **Verfahren und Einrichtung zum kontinuierlichen Behandeln einer Kante eines Metall-Flachwalzerzeugnisses**
Process and arrangement for continuously treating an edge of a flat rolled metal product
Procédé et installation pour le traitement continu d'une rive d'un produit métallique laminé plat

(30) Priorität: 16.02.1989 DE 3904742
(43) Veröffentlichungstag der Anmeldung: 22.08.1990
(73) Patentinhaber: VOEST-ALPINE Industrieanlagenbau GmbH, A-4020 Linz (AT)
(72) Erfinder: Petzl, Franz, A-4040 Linz (AT); Hössinger, Herbert, A-4040 Linz (AT)
(74) Vertreter: Wolfram, Gustav, Dipl.-Ing.

(56) Entgegenhaltungen:
- AT-B- 339 688
- DE-A- 1 955 259
- DE-A- 3 024 427
- GB-A- 1 146 893

## Beschreibung

Die Erfindung betrifft ein Verfahren zum kontinuierlichen Behandeln einer Kante eines Metall-Flachwalzerzeugnisses durch Arrondieren, insbesondere zum Abrunden einer Kante eines Metallbandes, sowie eine Einrichtung zum kontinuierlichen Behandeln einer Kante eines Metall-Flachwalzerzeugnisses. Ein Verfahren nach den Oberbegriff des Anspruchs 1 sowie eine Einrichtung nach dem Oberbegriff des Anspruchs 3 sind aus dem Stand der Technik gemäß DE-A-1955259 bekannt.

Bei vielen Gegenständen, die aus Metall-Flachwalzprodukten hergestellt werden, wie z.B. bei aus Stahlband hergestellten Feigen für die Automobilindustrie, ist es wünschenswert, die Kanten des Metall-Flachwalzerzeugnisses, also beim obigen Beispiel die Längskanten des Stahlbandes, abzurunden. Dies ist insbesondere dann erforderlich, wenn die Herstellung des Stahlbandes durch Teilen eines breiten Walzbandes in Längsrichtung erfolgt, da die Kanten des geschnittenen Stahlbandes nach dem Teilvorgang besonders scharf sind und oftmals Grate aufweisen.

Zum Abrunden einer Kante eines Stahlbandes ist es aus der DE-B - 1 121 904 bekannt, ein Stahlband durch eine sogenannte Arrondiervorrichtung hindurchzuführen, die von mindestens einem profilierten Rollenpaar gebildet ist, deren Rollen die scharfen Kanten durch Kaltverformen abrunden. Hierbei kommt es zu großen Kantenaufstauchungen und Kantenverfestigungen, die Kanteneinrisse bei der Weiterverformung verursachen können. Die Schweißbarkeit derart behandelter Kanten ist stark herabgesetzt. Die beim Teilvorgang gebildeten Grate werden zudem beim Arrondieren gestaucht, was zu örtlichen Dopplungen und damit zur Steigerung der Rostanfälligkeit führt.

Es ist weiters bekannt (AT-B - 339.688), die Kanten eines Metall-Flachwalzerzeugnisses spanabhebend zu bearbeiten, u.zw. mittels feststehender Messer. Die endgültige Form der Bandkanten wird hierbei mit Formhobelstählen gebildet. Da mit solchen feststehenden Messern nur eine geringe Spanabnahme möglich ist, müssen mehrere Messer hintereinander angeordnet werden. Bei weichen Metallen und Stahlqualitäten kommt es zur Bildung von Aufbauschneiden an den Messern und es treten Messerausbrüche auf, so daß die Messerstandzeit nur gering ist. Zudem ist es erforderlich, jede Schnittstelle mit Kühlmittel zu versorgen.

Die Erfindung bezweckt die Vermeidung dieser Nachteile und Schwierigkeiten und stellt sich die Aufgabe, ein Verfahren sowie eine Einrichtung der eingangs erwähnten Art zu schaffen, welche die Herstellung einer abgerundeten glatten Kante ermöglichen, die dopplungsfrei ist, keine Kantenüberhöhungen und nur eine geringe Kantenaufhärtung aufweist. Zudem soll eine lange Standzeit der einzusetzenden Werkzeuge gesichert sein.

Diese Aufgabe wird erfindungsgemäß dadurch gelöst, daß die Kante in einem Durchgang
- zunächst spanabhebend besäumt wird,
- anschließend mittels eines Fasenschnittes an zumindest einer Seite spanabhebend bearbeitet wird,
- worauf die Kante staucharrondiert und
- anschließend walzgeglättet wird.

Hierbei erfolgt das spanabhebende Besäumen und Fasenschneiden zweckmäßig durch Abscheren.

Eine vorteilhafte Einrichtung zur Durchführung des Vefahrens, mit einer mindestens eine Arrondierrolle aufweisenden Arrondiervorrichtung, ist gekennzeichnet durch die Kombination von Merkmalen nach Anspruch 3.

Hierbei weist vorteilhaft die Besäum- und die Fasenschneideinrichtung jeweils mindestens ein Rotationsmesser auf, wobei zweckmäßig das Rotationsmesser als sich lose drehendes Scheibenmesser ausgebildet ist, dessen Drehachse so ausgerichtet ist, daß die Schneide des Rotationsmessers mit der Kante des Metall-Flachwalzerzeugnisses einen Schnittreibungswinkel zwischen 10 und 20°, vorzugsweise zwischen 15 und 18°,einschließt.

Um Fasen mit verschiedenen Neigungswinkeln herstellen zu können, ist zweckmäßig die Drehachse des Rotationsmessers in einer Ebene quer zur Richtung der Kante gegenüber der Ebene des Metall-Flachwalzerzeugnisses neigbar.

Zur gleichzeitigen Behandlung beider Kanten eines Metallbandes in einem Durchgang sind vorteilhaft die Besäumschneideinrichtung, die Fasenschneideinrichtung, die Arrondiereinrichtung und die Glätteinrichtung in einem Durchgang doppelt vorhanden, u.zw. jeweils einander gegenüberliegend in einer Reihe an dem von den Kanten des Metallbandes zurückgelegten Behandlungsweg.

Um eine einwandfreie Kantenbehandlung zu erzielen, ist zweckmäßig das Metall-Flachwalzerzeugnis sowohl in Richtung der Ebene des Erzeugnisses als auch senkrecht hierzu und zur Bewegungsrichtung mittels Führungseinrichtungen geführt.

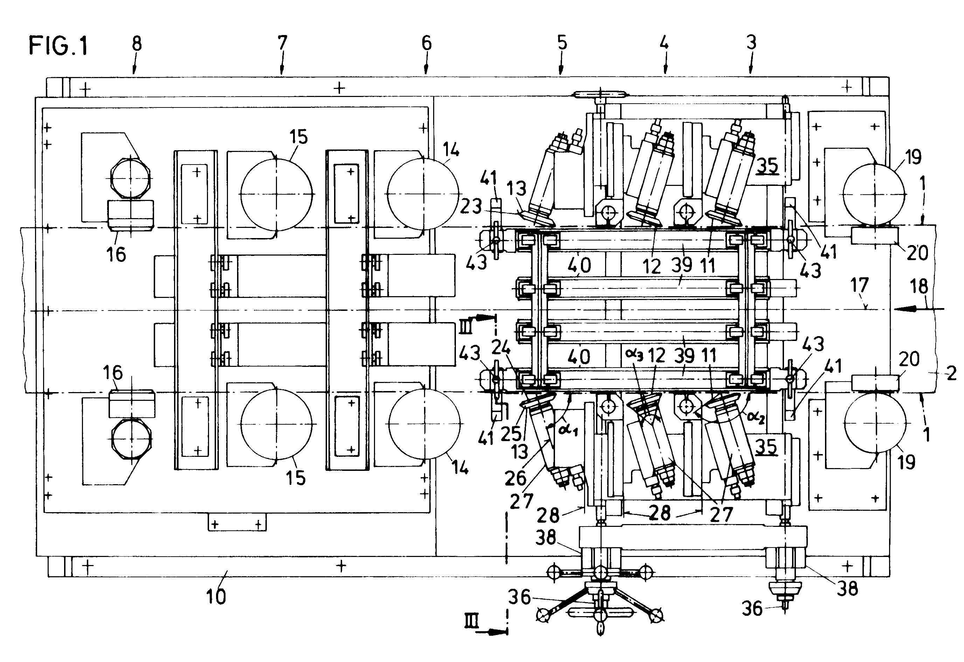

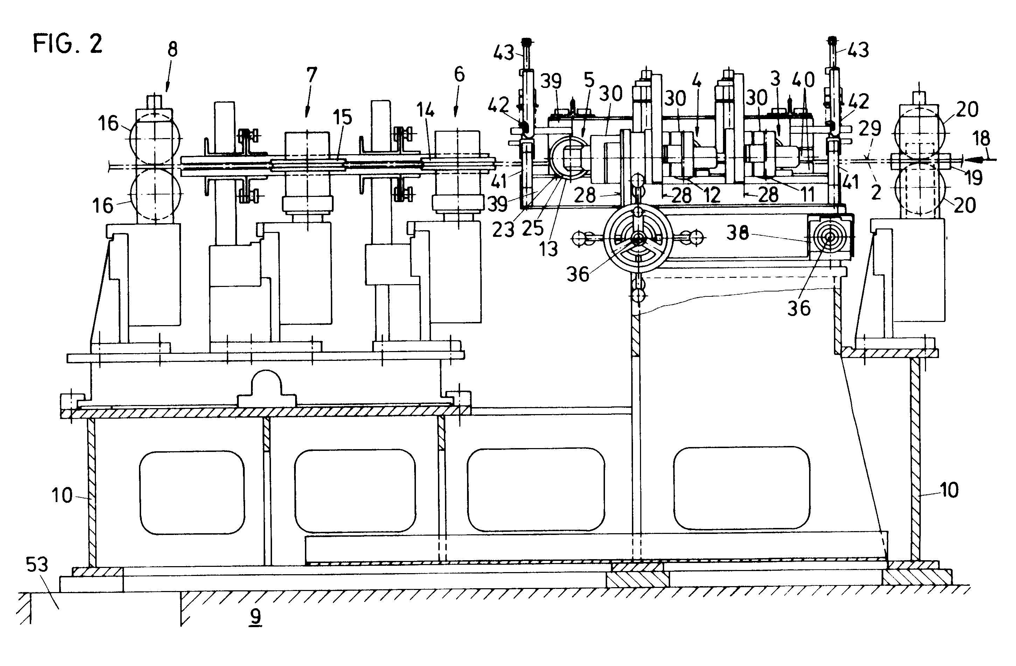

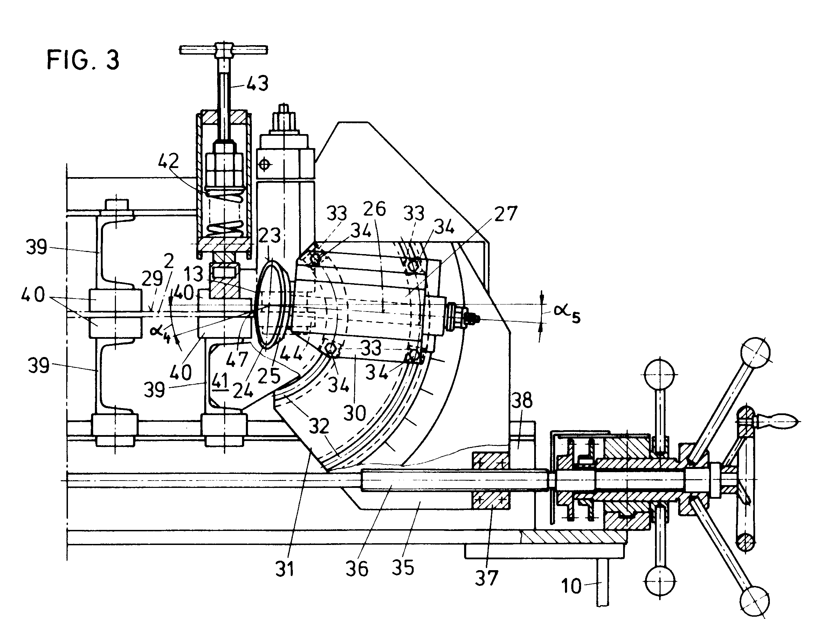

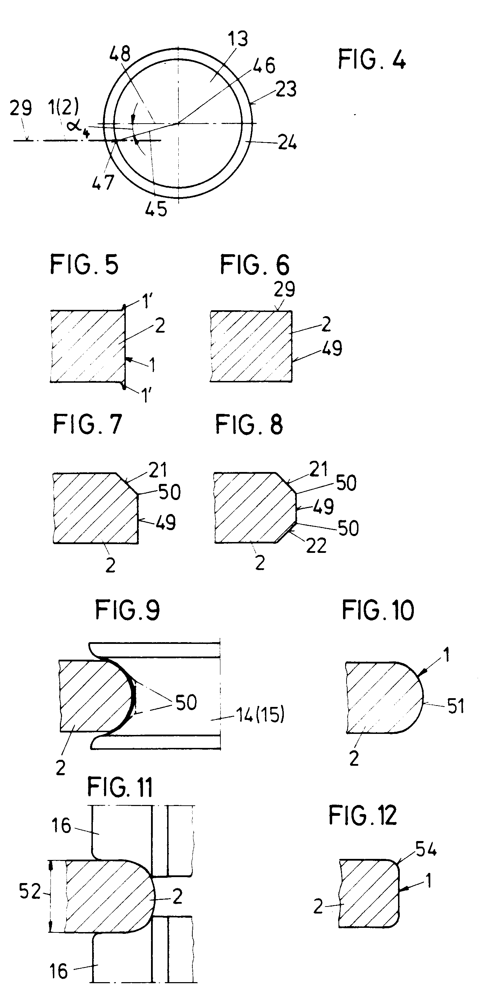

Die Erfindung ist nachfolgend anhand der Zeichnung an einem Ausführungsbeispiel, welches zum Abrunden und Glätten der Längskanten eines Stahlbandes dient, näher erläutert, wobei Fig. 1 eine Draufsicht auf eine erfindungsgemäße Einrichtung und Fig. 2 eine teilweise geschnittene Seitenansicht dieser Einrichtung zeigen. In Fig. 3 ist ein Detail in vergrößertem Maßstab gemäß dem nach den Linien III-III der Fig. 1 geführten Schnitt dargestellt. Fig. 4 zeigt eine Ansicht eines Rotationsmessers in Richtung seiner Drehachse. Die Fig. 5 bis 8 sowie 10 und 12 veranschaulichen unterschiedliche Längskantenquerschnitte; die Fig. 9 und 11 geben Teilansichten der Arrondierrollen und Glättungsrollen wieder.

Das mit zu bearbeitenden Längskanten 1 zu versehende Stahlband 2 wird von einem nicht dargestellten Bund abgewickelt, entlang der in der Zeichnung dargestellten Bearbeitungsstationen 3 bis 8 der Einrichtung geführt und nachfolgend wieder zu einem ebenfalls nicht dargestellten Bund gewickelt. Sämtliche Bearbeitungsstationen 3 bis 8 für die Kantenbearbeitung sind auf einem einteiligen, am Fundament 9 gelagerten Maschinengestell 10 angeordnet, wobei zur gleichzeitigen Bearbeitung beider Längskanten 1 des Stahlbandes 2 sämtliche Bearbeitungswerkzeuge 11 bis 16 symmetrisch zur Mittellinie 17 der Durchlaufbahn 18 des Stahlbandes 2 angeordnet sind. Weiters können sämtliche Bearbeitungswerkzeuge 11 bis 16 und auch die nachfolgend beschriebenen Führungselemente für das Stahlband 2 bzw. dessen Längskanten 1 zwecks Anpassung an unterschiedliche Bandbreiten in horizontaler Richtung quer zur Mittellinie 17 zueinander oder voneinander bewegt werden.

Das Maschinengestell 10 trägt an der Einlaufseite des Stahlbandes 2 das Stahlband 2 in horizontaler Richtung und in vertikaler Richtung führende Rollen 19, 20, die dementsprechend um horizontale und vertikale Achsen drehbar gelagert sind. Diese Rollen sind glattwandig. An diese Rollen sind in Durchlaufrichtung anschließend die für die Erfindung wesentlichen spanabhebenden Bearbeitungsstationen 3, 4, 5 mit den Bearbeitungswerkzeugen 11 bis 13 vorgesehen, mit deren Hilfe die Längskanten 1 des Stahlbandes 2 besäumt und mit einer Fase 21, 22 versehen werden können. Es sind insgesamt drei spanabhebende Bearbeitungsstationen 3, 4, 5 vorgesehen, wobei jede Bearbeitungsstation 3 bis 5 mit paarweise um die Mittellinie 17 der Durchlaufbahn 18 des Stahlbandes 2 gegenüberliegenden Rotationsmessern 11, 12, 13 ausgestattet ist.

Die Rotationsmesser 11, 12, 13 sind als sich lose drehende Scheibenmesser ausgebildet, die durch das an ihnen vorbeibewegte Stahlband 2, mit dem sie mit ihrer Schneide 23 in Kontakt geraten, in Drehung versetzt werden, was wie folgt erläutert ist:

Jedes Rotationsmesser 11 bis 13 ist geometrisch von zwei Kreis-Kegelstümpfen 24, 25 gebildet, die an ihrer Basis aneinander anliegen, wobei der Umfang der Basis die Schneide 23 bildet. Die Rotationsmesser 11 bis 13 sind jeweils an einer Drehachse 26 befestigt, die mit der Mittelachse der beiden Kreis-Kegelstümpfe 24, 25 zusammenfällt und die in einem Gehäuse 27 drehbar gelagert ist.

Die Rotationsmesser 11 bis 13 sind - von oben gesehen - mit ihrer Drehachse 26 schräg zur Mittellinie 17 der Durchlaufbahn 18 geneigt angeordnet, wobei der Neigungswinkel α₁ etwa mit dem dem halben Öffnungswinkel α₂ des äußeren, dem Stahlband 2 zugewendeten Kegelstumpfes 24 entsprechenden Komplementärwinkel übereinstimmt oder geringfügig größer ist als dieser, so daß die Längskante 1 des Stahlbandes 2 von oben gesehen etwa parallel verläuft zur Kontur dieses Kegelstumpfes 24. Der innere Kegelstumpf 25 weist einen geringeren Öffnungswinkel α₃ als der äußere Kegelstumpf 24 auf.

Jedes Gehäuse 27 der Rotationsmesser 11 bis 13 ist entlang einer Ebene 28, die sich quer zur Mittellinie 17 der Durchlaufbahn 18 erstreckt, winkelverstellbar, so daß die Schneide 23 jedes Rotationsmessers 11 bis 13 zwecks Schneidens unterschiedlich geneigter Fasen 21, 22 in unterschiedlichen Anstellwinkeln α₅ zur Ebene 29 des Stahlbandes 2 ausgerichtet werden kann. Zu diesem Zweck sind an den Gehäusen 27 Flansche 30 vorgesehen, die jeweils an einer bogenförmig gestalteten Führungsfläche 31 anliegen. Zur Fixierung des Flansches 30 des Gehäuses 27 gegenüber der Führungsfläche 31 dienen kreisbogenförmig gestaltete hinterschnittene Nuten 32 in den Führungsflächen, in denen Gleitsteine 33 geführt sind, die mittels die Flansche 30 durchsetzender Schrauben 34 gegen die Flansche 30 spannbar sind.

Bei zwei (3 und 4) der spanabhebenden Bearbeitungsstationen 3 bis 5 sind Anstellwinkel α₅ bis + 60° und bei einer (5) ist der Anstellwinkel α₅ bis -60° einstellbar, wobei eine Einstellung des Anstellwinkels α₅ von -5°, also eine Neigung von 5° von der Ebene 29 des Stahlbandes 2 nach unten, einen etwa rechtwinkelig zur Ebene 29 des Stahlbandes gerichteten Besäumschnitt bewirkt.

Die Führungsflächen 31 aller an einer Seite der Druchlaufbahn 18 angeordneten Rotationsmesser 11 bis 13 sind jeweils an einem quer zur Mittellinie 17 der Durchlaufbahn 18 des Stahlbandes 2 horizontal verschiebbaren Schlitten 35 angeordnet, wobei zur Verschiebung der beiden Schlitten 35 Schraubenspindeln 36 dienen, die an den Führungsschlitten 35 montierte Muttern 37 durchsetzen. Die Schraubenspindeln 36 sind am Maschinengestell 10 drehbar, jedoch axial unverschiebbar gelagert und können gegen Verdrehen gesichert werden, so daß eine einmal eingestellte Position der Schlitten 35 fixiert ist. Beide Schlitten 35 sind an am Maschinengestell 10 starr angeordneten Führungen 38 abgestützt.

Zur Führung und Stabilisierung des Stahlbandes 2 in einer Ebene 29 dienen ober- und unterhalb der Ebene 29 des Stahlbandes 2 vorgesehene, an starren, sich parallel zur Mittellinie 17 erstreckenden Profilen 39 angeordnete Führungsleisten 40 aus Holz, von denen die unteren gegenüber dem Maschinengestell 10 starr montiert sind und die oberen an den unteren mittels das Stahlband 2 seitlich umgreifenden Blechen 41 gehalten und gegen das Stahlband 2 mittels Federn 42 preßbar sind, deren Federvorspannung mit Hilfe von Schraubspindeln 43 einstellbar ist.

Zwischen jeweils zwei in Bewegungsrichtung des Stahlbandes 2 hintereinander angeordneten Rotationsmessern 11, 12, 13 sind zur Seitenführung des Stahlbandes 2 die Längskante 1 kontaktierende Seitenführungsrollen 44 an den die Führungsflächen 31 tragenden Schlitten 35 drehbar gelagert.

Wie insbesondere aus den Fig. 3 und 4 ersichtlich ist - in denen ein Rotationsmesser 13 in einer Stellung zum Besäumen dargestellt ist -, trifft die Längskante 1 des Stahlbandes 2 an die Schneide 23 des Rotationsmessers 13 unter einem Schnittreibungswinkel α₄ von 10 bis 20°, vorzugsweise 15 bis 17°. Dieser Schnittreibungswinkel α₄ wird von dem Radiusstrahl 45, der vom Mittelpunkt 46 der kreisförmigen Schneide 23 ausgeht und zur Berührungsstelle 47 bzw. Schnittstelle 47 der Längskante 1 des Stahlbandes 2 mit der Schneide 23 führt, und einem durch den Mittelpunkt 46 der Schneide 23 parallel zur Ebene 29 des Stahlbandes 2 gelegten Radiusstrahl 48 eingeschlossen.

Gemäß dem dargestellten Ausführungsbeispiel dienen die ersten paarweise angeordneten Rotationsmesser 11 zum Besäumen der einen Grat 1' gemäß Fig. 5 aufweisenden Längskante 1, also zum Herstellen einer gratfreien, zur Ebene 29 des Stahlbandes 2 etwa vertikal gerichteten Schnittfläche 49, wie sie in Fig. 6 dargestellt ist. Die beiden nachfolgenden Rotationsmesserpaare 12 und 13 dienen zum Schneiden von Fasen 21,22, u.zw. einmal an der Oberseite (vgl. Fig. 7) und einmal an der Unterseite des Stahlbandes 2 (vgl. Fig. 8).

Den Rotationsmessern nachfolgend sind zwei sich um vertikale Achsen drehende antriebslose Arrondierrollenpaare 14, 15 vorgesehen, deren Profile in Fig. 9 in Ansicht dargestellt sind. Ihre Profile sind etwa halbkreisförmig gestaltet, so daß die nach dem Fasenschneiden entstandenen stumpfwinkeligen Ecken 50 abgerundet werden und ein gleichmäßig rundes Kantenprofil 51, wie es in Fig. 10 dargestellt ist, gebildet wird.

An der letzten Bearbeitungsstation 8 sind jeder Längskante 1 des Stahlbandes 2 zugeordnete lose laufende Glättungsrollenpaare 16 mit parallel zur Ebene 29 des Stahlbandes 2 gerichteten Drehachsen vorgesehen, deren Profil in Fig. 11 in Seitenansicht dargestellt ist. Sie dienen dazu, die Dicke 52 des Stahlbandes 2 überschreitende Verformungen, die aufgrund der Einwirkung der Arrondierrollenpaare 14, 15 entstehen könnten, wieder rückgängig zu machen, d.h. eine gleichmäßige Banddicke 52 über den gesamten Querschnitt des Stahlbandes 2 sicherzustellen.

Unterhalb des Maschinengestelles befindet sich eine Schrottgrube 53, in der ein Spansammelbehälter untergebracht ist.

Mit der oben beschriebenen Einrichtung ist es nicht nur möglich, das in Fig. 10 dargestellte Kantenprofil 51 herzustellen, sondern es können beliebige Kantenprofile erzeugt werden. Zur Herstellung des in Fig. 12 beispielsweise dargestellten Kantenprofiles 54 mit gerundeten Ecken ist nur ein geringer Fasenschnittdurchzuführen und es sind Arrondierrollenpaare mit einem entsprechenden Gegenprofil vorzusehen. Ist es erwünscht, die Kanten lediglich mit Fasen zu versehen, also ein Kantenprofil gemäß Fig. 8 herzustellen, treten die unabhängig von den Rotationsmessern 11 bis 13 an die Längskante 1 des Stahlbandes 2 anstellbaren Arrondier- und Glättungsrollenpaare 14 bis 16 außer Funktion.

## Patentansprüche

1. Verfahren zum kontinuierlichen Behandeln einer Kante (1) eines Metall-Flachwalzerzeugnisses (2) durch Arrondieren, insbesondere zum Abrunden einer Kante (1) eines Metallbandes (2), dadurch gekennzeichnet, daß die Kante (1) in einem Durchgang
- zunächst spanabhebend besäumt wird,
- anschließend mittels eines Fasenschnittes an zumindest einer Seite spanabhebend bearbeitet wird,
- worauf die Kante (1) staucharrondiert und
- anschließend walzgeglättet wird.

2. Verfahren nach Anspruch 1, dadurch gekennzeichnet, daß das spanabhebende Besäumen und Fasenschneiden durch Abscheren erfolgt.

3. Einrichtung zum kontinuierlichen Behandeln einer Kante eines Metall-Flachwalzerzeugnises zur Durchführung des Verfahrens nach Anspruch 1 oder 2, mit einer mindestens eine Arrondierrolle aufweisenden Arrondiervorrichtung (14, 15) und einer nachfolgend angeordnete Glätteinrichtung (16) mit mindestens einer Glättungsrolle, dadurch gekennzeichnet, daß der Arrondiervorrichtung eine Besäumschneideinrichtung (11) sowie eine dieser in Durchlaufrichtung des Metall-Flachwalzerzeugnisses (2) nachgeordnete Fasenschneideinrichtung (12, 13) vorgeordnet sind.

4. Einrichtung nach Anspruch 3, dadurch gekennzeichnet, daß die Besäum- und die Fasenschneideinrichtung jeweils mindestens ein Rotationsmesser (11, 12, 13) aufweisen.

5. Einrichtung nach Anspruch 4, dadurch gekennzeichnet, daß das Rotationsmesser (11, 12, 13) als sich lose drehendes Scheibenmesser ausgebildet ist, dessen Drehachse (26) so ausgerichtet ist, daß die Schneide (23) des Rotationsmessers (11, 12, 13) mit der Kante (1) des Metall-Flachwalzerzeugnisses (2) einen Schnittreibungswinkel (α₄) zwischen 10 und 20°, vorzugsweise zwischen 15 und 18°, einschließt.

6. Einrichtung nach Anspruch 5, dadurch gekennzeichnet, daß die Drehachse (26) des Rotationsmessers (11, 12, 13) in einer Ebene (28) quer zur Richtung der Kante (1) gegenüber der Ebene (29) des Metall-Flachwalzerzeugnisses (2) neigbar ist.

7. Einrichtung nach einem oder mehreren der Ansprüche 3 bis 6, dadurch gekennzeichnet, daß die Besäumschneideinrichtung (11), die Fasenschneideinrichtung (11, 13), die Arrondiereinrichtung (14, 15) und die Glätteinrichtung (16) zur gleichzeitigen Behandlung beider Kanten (1) eines Metallbandes (2) in einem Durchgang doppelt vorhanden sind, u.zw. jeweils einander gegenüberliegend in einer Reihe an dem von den Kanten (1) des Metallbandes zurückgelegten Behandlungsweg.

8. Einrichtung nach einem oder mehreren der Ansprüche 3 bis 7, dadurch gekennzeichnet, daß das Metall-Flachwalzerzeugnis (2) sowohl in Richtung der Ebene (29) des Erzeugnisses als auch senkrecht hierzu und zur Bewegungsrichtung mittels Führungseinrichtungen (19, 20, 40) geführt ist.

## Claims

1. A method of continuously treating an edge (1) of a flat rolled metal product (2) by rounding off, in particular, of rounding off an edge (1) of a metal strip (2), characterized in that the edge (1), in one pass,
- at first is trimmed by cutting,
- subsequently is cut on at least one side by chamfer cutting,
- whereupon the edge (1) is edge-rounded and
- subsequently is smooth-rolled.

2. A method according to claim 1, characterized in that trimming by cutting and chamfer cutting are effected by shearing off.

3. An arrangement for continuously treating an edge of a flat rolled metal product, for carrying out the method according to claim 1 or 2, comprising a rounding device (14, 15) including at least one rounding-off roller and a consecutively arranged smoothing device (16) including at least one smoothing roller, characterized in that the rounding-off device is preceded by a trim-cutting device (11) as well as a chamfer-cutting device (12, 13) arranged to follow the latter in the flow direction of the flat rolled metal product (2).

4. An arrangement according to claim 3, characterized in that the trim-cutting device and the chamfer-cutting device each comprise at least one rotating blade (11, 12, 13).

5. An arrangement according to claim 4, characterized in that the rotating blade (11, 12, 13) is designed as a loosely rotating roller blade whose axis of rotation (26) is oriented such that the cutting edge (23) of the rotating blade (11, 12, 13) encloses a cutting angle of friction (α₄) of between 10 and 20°, preferably 15 and 18°, with the edge (1) of the flat rolled metal product (2).

6. An arrangement according to claim 5, characterized in that the axis of rotation (26) of the rotating blade (11, 12, 13) is adapted to be inclined relative to the plane (29) of the flat rolled metal product (2) in a plane (28) extending transverse to the direction of the edge (1).

7. An arrangement according to one or several of claims 3 to 6, characterized in that the trim-cutting device (11), the chamfer-cutting device (12, 13), the rounding-off device (14, 15) and the smoothing device (16) are provided in duplicate for simultaneously treating both edges (1) of a metal strip (2) in one pass, each opposite the other in a row at the path of treatment covered by the edges (1) of the metal strip.

8. An arrangement according to one or several of claims 3 to 7, characterized in that the flat rolled metal product (2) is guided by guiding means (19, 20, 40) both in the direction of the plane (29) of the product and perpendicular thereto as well as to the direction of movement.

## Revendications

1. Procédé pour traiter en continu par arrondissage une rive (1) d'un produit métallique laminé en plat (2), en particulier pour arrondir une rive (1) d'un ruban métallique (2), caractérisé en ce que la rive (1), en un passage,
- d'abord est rognée par enlèvement de copeaux,
- puis est usinée par chanfreinage sur au moins un côté,
- après quoi la rive (1) est arrondie par refoulement,
- puis est lissée par laminage.

2. Procédé selon la revendication 1, caractérisé en ce que le rognement par enlèvement et le chanfreinage sont effectués par cisaillement.

3. Installation pour traiter en continu une rive d'un produit métallique laminé en plat (2) pour la mise en oeuvre du procédé selon la revendication 1 ou 2, comportant un moyen d'arrondissement (14, 15) qui comprend au moins un rouleau à arrondir suivi d'un moyen de lissage (16) qui comprend au moins un rouleau à lisser, caractérisée en ce que le moyen d'arrondissement est précédé d'un moyen de rognement (11) ainsi que d'un moyen de chanfreinage (12, 13) placé en aval de celui-ci en sens de passage du produit métallique laminé en plat.

4. Dispositif selon la revendication 3, caractérisée en ce que chacun des moyens de rognement et de chanfreinage comprend au moins une lame rotative (11, 12, 13).

5. Dispositif selon la revendication 4, caractérisée en ce que la lame rotative (11, 12, 13) est configurée en lame circulaire dont l'axe de rotation (26) est orienté de sorte que l'arête (23) de la lame rotative (11, 12, 13) fait un angle de frottement de coupe (α₄) entre 10 et 20°, de préférence entre 15 et 18°, avec la rive (1) du produit métallique laminé en plat (2).

6. Dispositif selon la revendication 5, caractérisée en ce que l'axe de rotation (26) de la lame rotative (11, 12, 13) est susceptible d'être incliné par rapport au plan (29) du produit métallique laminé en plat (2), dans un plan (28) s'étendant transversalement au sens de la rive (1).

7. Dispositif selon l'une ou plusieurs des revendications 3 à 6, caractérisée en ce que le moyen de rognage (11), le moyen de chanfreinage (12, 13), le moyen d'arrondissement (14, 15) et le moyen de lissage (16) sont prévus en double pour le traitement simultané des deux rives (1) d'un ruban métallique (2) en un passage, chacun opposé l'autre dans une série sur la marche de traitement parcourue par les rives (1) du ruban métallique.

8. Dispositif selon l'une ou plusieurs des revendications 3 à 7, caractérisée en ce que le produit métallique laminé en plat (2) est guidé par des moyens de guidage (19, 20, 40) aussi bien dans la direction du plan (29) de produit qu'en sens perpendiculaire à celle-ci et à la direction du mouvement.
